(19) Europäisches Patentamt European Patent Office Office européen des brevets

(11) **EP 4 524 818 A1**

(12) **EUROPEAN PATENT APPLICATION**

(43) Date of publication:
**19.03.2025 Bulletin 2025/12**

(21) Application number: **23196918.9**

(22) Date of filing: **12.09.2023**

(51) International Patent Classification (IPC):
**G06N 3/047** $^{(2023.01)}$    **G06N 3/084** $^{(2023.01)}$
**G06N 7/01** $^{(2023.01)}$

(52) Cooperative Patent Classification (CPC):
**G06N 3/047; G06N 3/045; G06N 3/084; G06N 7/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Nalisnick, Eric
  1086 ZR Amsterdam (NL)**
• **Zhang, Dan
  71229 Leonberg (DE)**
• **Jazbec, Metod
  1012 BH Amsterdam (NL)**

(54) **DEVICE AND METHOD FOR DETERMINING AN OUTPUT SIGNAL AND A CONFIDENCE IN THE DETERMINED OUTPUT SIGNAL**

(57)    Computer-implemented method for determining a first element and a second element, wherein the first element characterizes a classification or a regression result of a sensor signal and the second element characterizes a confidence interval of likely classifications or regression results, wherein the first element and second element are determined by an early-exit neural network, the method comprising the steps of:
• Determining, by the early-exit neural network, a feature representation of the sensor signal, which is provided to a head of the early-exit neural network;
• Providing a predictive posterior distribution or an argument of the maximum of the predictive posterior distribution as first element, wherein the predictive posterior distribution is determined based on a posterior distribution of sets of weights of the head and a likelihood of the feature representation given a set of weights of the head;
• Sampling a set of weights from the posterior distribution of sets of weights of the head;
• Determining a likelihood ratio for possible classifications or regression results by dividing a value of the predictive posterior distribution at the feature representation by a likelihood of the feature representation given the sampled set of weights;
• Determining the confidence interval as the possible classes or regression results for which the likelihood ratio is equal to or below a predefined threshold and providing the confidence interval or a value characterizing the width of the confidence interval as the second element.

Fig. 1

EP 4 524 818 A1

## Description

Technical field

The invention concerns a computer-implemented method for determining a classification and/or regression result, a method for training a neural network, a method for using the determined classification and/or regression result for determining a control signal of a technical system, a computer program, and a machine-readable storage device.

Prior Art

Meronen et al. "Fixing Overconfidence in Dynamic Neural Networks", 2023, https://arxiv.org/abs/2302.06359 discloses an early-exit neural network determining its outputs based on Bayesian inference.

Waudby-Smith and Ramdas "Confidence sequences for sampling without replacement", 2020, https://arxiv.org/abs/2006.04347 discloses generic approach to constructing a frequentist confidence sequence using Bayesian tools, based on the fact that the ratio of a prior to the posterior at the ground truth is a martingale.

Technical background

Many applications today rely on the use of neural networks to predict certain quantities of the real-world. Common applications include classifying sensor signals or performing regression with respect to sensor signals in order to determine certain physical aspects of an environment in which the sensor signal was recorded. For example, in robotics neural networks are heavily used to predict a virtual environment model of a robot based on sensors such as cameras, lidars, radars or the like.

Uncertainty quantification is essential for safety and reliability in these applications, especially for autonomous driving. However, computing uncertainty estimates is often costly, and this cost is especially limiting in low-resource or latency-critical settings as is common for robotic applications. Early-exit neural networks (EENNs) provide a partial-solution to these problems. As the name implies, these architectures have multiple exits that allow a prediction to be generated at an arbitrary stopping point along the architecture of the EENN. Standard uncertainty quantification techniques, such as Bayesian or conformal inference, can then be applied to each exit.

However, the inventors found that known methods lead to insufficient uncertainty quantifications as the uncertainties for each exit (or head) of an EENN are modelled as independent in known approaches, whereas in reality uncertainties of neighboring exits are dependent. For example, an uncertainty interval for the prediction at a given exit should be consistent with the intervals at the previous and subsequent exits. If a candidate prediction (classification of regressions result) is in an interval at exit $t$ - 1 and drops out of the interval at exit $t$, the prediction should not re-enter the interval at exit $t$ + 1 because the prediction has been ruled out by another exit. An even worse case would be that the intervals at time $t$ and $t$ + 1 are disjoint sets. This can happen even when using conformal inference, as its coverage guarantees hold only marginally (i.e., on average).

The invention proposes a method for treating the uncertainties determined from different heads of an EENN as dependent. Advantageously, this is achieved by treating the predictive uncertainty across the EENN's exits as an anytime-valid confidence sequence (AVCS). AVCSs were developed for statistical inference in streaming (data) settings and thus are guaranteed to have a non-increasing interval width. In turn, this allows for consistent uncertainty estimates across heads of an EENN which leads to a better uncertaint y quantification of an EENN concerning its own predictions. Subsequently, this leads to more reliability on the predictions of an EENN and hence a reduced risk when using an EENN for a safety-critical application such as autonomous driving.

Disclosure of the invention

In a first aspect, the invention concerns a computer-implemented method for determining a first element and a second element, wherein the first element characterizes a classification or a regression result of a sensor signal and the second element characterizes a confidence interval of likely classifications or regression results, wherein the first element and second element are determined by an early-exit neural network, the method comprising the steps of:

- Determining, by the early-exit neural network, a feature representation of the sensor signal, which is provided to a head of the early-exit neural network;
- Providing a predictive posterior distribution or an argument of the maximum of the predictive posterior distribution as first element, wherein the predictive posterior distribution is determined based on a posterior distribution of sets of weights of the head and a likelihood of the feature representation given a set of weights of the head;
- Sampling a set of weights from the posterior distribution of sets of weights of the head;
- Determining a likelihood ratio for possible classifications or regression results by dividing a value of the predictive posterior distribution at the feature representation by a likelihood of the feature representation given the sampled set of weights;
- Determining the confidence interval as the possible classes or regression results for which the likelihood ratio is equal to or below a predefined threshold and providing the confidence interval or a value characterizing the width of the confidence interval as the second element.

An early-exit neural network (EENN) can generally be understood to determine predictions (e.g., classifications or regressions results) at various depths (i.e., after certain layers of the EENN) by having several prediction heads branch out from a shared backbone network. An EENN may hence be understood as defining a sequence of predictive models: $f(x|W_t, U_{1:t}): X \rightarrow Y, t = 1, ..., T,$ where $W_t$ represents the parameters (also known as weights) of the predictive head at exit $t$ and $U_t$ denotes the parameters of the $t$-th block in the backbone architecture. In other words, all layers of an EENN which do not form at least a part of the heads can be considered as forming at least parts the backbone. EENNs are usually trained by fitting all exits at once. At test time (also known as inference time), the intermediate predictions of EENNs can be utilized in numerous ways. For instance, if the EENN is deemed sufficiently confident at head $t$, computation can be halted without propagating through later blocks, thus speeding up prediction time.

The head can be understood as performing Bayesian linear regression with the weights being the parameters of the Bayesian linear regression. The distribution of weights hence characterizes a likelihood for the possible sets of weights, i.e., for each set of possible weights in the Bayesian linear regression a likelihood can be determined by the distribution. Sampling weights from the distribution may hence be understood as sampling a set of weights from the distribution, e.g., all weights necessary to perform the Bayesian linear regression. The regression coefficients (also referred to as bias or biases in the field of neural networks) are considered as part of the weights of the Bayesian linear regression.

The first element characterizing a classification may be understood as the first element comprising or consisting of one or multiples values that indicate the classification, e.g., a class index, a class label, and/or a plurality of probabilities or logits for each class of a set of possible classes.

The first element characterizing a regression result may be understood as the first element comprising or consisting of one or multiple real values indicating characteristics of the sensor signal, especially physical characteristics of the input signal. For example, the output signal may be understood as a result of a virtual sensor with the early-exit neural network serving as virtual sensor of a physical property that can be derived from the input signal. An example would be a to derive a temperature present in an electric machine (e.g., an electric motor) by means of a sensor signal comprising a current in the electric machine and/or an outside temperature of the electric machine.

The sensor signal may be understood as a result of a measurement conducted with a sensor. The measurement may either happen right before applying the method (e.g., as part of an online method for classifying/performing regression) or the measurement may happen earlier and the sensor signal may be obtained from, e.g., a database.

Determining, by the early-exit neural network, the feature representation of the sensor signal may be understood as providing the sensor signal as input to the EENN and propagating it through one or multiple layers of the EENN, wherein the layers are configured to each determine a feature representation. One of the feature representations is used as input to the head, i.e., serves as the feature representation of the sensor signal with respect to the head. Instead of using the sensor signal as input, the sensor signal may also be transformed by one or multiple pre-processing operations (e.g., smoothing, normalizing, extracting a part from the sensor signal) and then providing the result of pre-processing the sensor signal as input to the EENN.

The sensor signal may, in general, be understood as a result of conducting a measurement of the real-world using a sensor. The EENN may be configured to process specific sensor signals, e.g., by training on the EENN on other sensor signals similar to the sensor signal. Alternatively, training may be conducted on preprocessed sensor signals if the EENN shall conduct inference on preprocessed sensor signals.

The sensor signal may especially be an image as recorded by an optical sensor, e.g., a camera, a thermal camera, a lidar, a radar, or an ultrasonic sensor. The image may hence be represented by a collection of low-level features extracted by the measurement, e.g., pixels, depth measurements, voxels or the like.

The sensor signal may also comprise multiple measurements of different or similar sensors, e.g., multiple images from different cameras are images from at least one camera and at least one lidar. The sensor signal may also comprise a series of measurements, i.e., a time series of measurements.

Providing a predictive posterior distribution or an argument of the maximum of the predictive posterior distribution may be understood as performing Bayesian inference to determine the predictive posterior distribution, i.e., marginalizing the distribution of predictions (i.e., possible classifications or possible regression results) over the posterior distribution of weights of the head, and then providing this distribution or an argument of the maximum of the distribution. The first element may hence be a distribution of possible classifications or regression values or a maximum argument of such a distribution.

Preferably, a conjugate prior is chosen for the distribution of weights, which allows for exact inference (conjugate Bayesian inference) when determining the predictive posterior distribution. This is especially suitable when prediction regression results. For predicting classifications, approximation methods may be used for Bayesian inference, e.g., Laplace approximation.

Determining a likelihood ratio for possible classifications or regression results by dividing a value of the predictive posterior distribution at the feature representation by a likelihood of the feature representation given the sampled set of weights can be conducted according to the formula:

$$R_l(y) = \frac{p_l(y|x,D)}{p(y|x,W_l)},$$

wherein $y$ is a possible class or regression result, $l$ is an index of a head in the plurality of heads, $p_l$ is the likelihood of the predictive posterior distribution of the $l$-th head given a training dataset $D$ and an input $x$ to the EENN, i.e., the sensor signal or a result of pre-processing the sensor signal, and $p$ is the likehood of predicting y at head $l$ when using the set of sampled weights $W_l$.

In the formula, the predictive posterior distribution is defined in terms of the input $x$. That is, while the distribution is conditional on $x$, evaluation of the predictive posterior distribution may especially be performed by propagating the input through the EENN, determining the feature representation to be provided to the $l$-th head and then determining the posterior predictive distribution by conducting Bayesian linear regression. The notation above is merely a selection of possible definitions of the predictive posterior distribution. In the formulation above, the training dataset $D = \{(x_i, y_i)\}_{i=1}^{N}$ comprises tuples of sensor signals $x_i$ and desired classifications or regression results $y_i$ with respect to the sensor signal. It would just as well be possible to define $x$ as the feature representation for the $l$-th head and have the dataset comprise tuples of feature representations $x_i$ (i.e., determined by forwarding sensor signals from an original training dataset through the EENN thereby determining a feature representation for each head and sensor signal) and corresponding desired classifications or regression results $y_i$.

The predefined threshold is preferably a non-negative number and preferably not zero.

Preferably, the early-exit neural network comprises a plurality of heads, wherein sets of weights for each head are characterized by a posterior distribution of sets of weights and an order of the plurality of heads is given by their position within the early-exit neural network and wherein the head is preceded by at least one other head in the order of heads and wherein the likelihood ratio for a possible class or regression result is determined by multiplying a likelihood ratio for the class or regression result determined for the other head with the likelihood ratio determined for the head.

Advantageously, using multiple heads in the EENN and multiplying the likelihood ratios, the inventors found that this leads to the uncertainty characterized by the head to incorporate the uncertainty about the prediction of the other head or other heads. The authors advantageously found that, in statistical terms, the likelihood ratio may be understood as a martingale, which comes with a variety of advantageous properties. One of these properties is that the sequence of confidence intervals determined by means of the likelihood ratio characterizes an anytime-valid confidence sequence.

In other words, if for one of the heads a possible class or regression value falls out of the confidence interval for the respective head, the possible class or regression value cannot enter into the confidence interval of a preceding head due to the multiplication. Hence, this leads to the heads "agreeing" on a confidence interval, i.e., a union of confidence intervals.

The inventors found that this advantageously leads to more accurate uncertainty predictions considering the first element, i.e., the classification or regression result can be assigned an accurate value how uncertain the EENN is about its prediction. The uncertainty value can then subsequently be used to decide whether the prediction (i.e., the first element) can be trusted or not.

Preferably, the likelihood ratio for any head of the plurality of heads is determined according to the formula:

$$R_t(y) = \prod_{l=1}^{t} \frac{p_l(y|x,D)}{p(y|x,W_l)},$$

wherein $y$ is a possible class or regression result, $l$ is an index of a head in the plurality of heads, $p_l$ is the likelihood of the predictive posterior distribution of the $l$-th head, $p$ is the likehood of predicting $y$ at head $l$ when using the set of sampled weights $W_l$, and $R_t(y)$ is the likelihood ratio (martingale) for head $t$.

The authors found that when predicting a classification, $R_t$ can be determined for each class of the set of classes that can be predicted by the EENN, wherein the confidence interval is then characterized by all class for which $R_t$ is smaller or equal to the predefined threshold. The predefined threshold can be considered a hyperparameter of the method. The threshold can advantageously be defined in terms of a reciprocal, e.g., characterized by the formula $1/\alpha$. Such a formulation allows for a direct interpretation of the threshold, namely that a probability for the confidence interval being correct (i.e., the confidence interval comprising the correct classification or regression result) is equal to or below $\alpha$. Preferably, $\alpha$ can be defined in terms of a probability.

Preferably, if the first element characterizes a regression result and the confidence interval is determined by determining bounds of the confidence interval, wherein the bounds of the confidence interval are the roots of a function characterized by the formula:

$$\log R_t(y) - \log(1/\alpha) = 0,$$

wherein $1/\alpha$ is the predefined threshold.

Advantageously, the inventors discovered that $\log R_t(y)$ is a quadratic function in $y$ if, e.g., the predictive posterior distribution is a Gaussian distribution. The bounds of the confidence interval can hence be found analytically as they are the roots of the formula above.

Preferably, a prior distribution of the weights of the respective heads is a conjugate prior. Using a conjugate prior allows for a closed-form solution of finding the roots and is hence particularly valuable from a computational perspective as it eliminates the additional overhead of iterating over all or a large amount of possible regression results.

Preferably, the head is not the last head in the plurality of heads and wherein the predictive posterior distribution or a maximum of the predictive posterior distribution is provided as first element and the confidence interval or the value characterizing the width of the confidence interval is provided as the second element if the confidence interval is smaller than or equal to a predefined threshold but not empty and wherein otherwise the predictive posterior distribution or a maximum of the predictive posterior distribution corresponding to a head following the head is provided as first element and a second confidence interval or a value characterizing the width of the second confidence interval corresponding to the head following the head is provided as confidence interval.

This may also be understood as a user of the EENN being able to stop computation at the head, "peek" at the current result, and proceed with computations of a confidence value with respect to the current prediction is high enough. If the confidence value is not high enough, a decision about the prediction may be "deferred" to a later head of the EENN.

Advantageously, this approach allows for a decrease in computational complexity as most prediction confidences are already high for heads early in the EENN.

A confidence about the prediction of the head may be derived from the confidence interval. For example, a reciprocal or negative of the width of the confidence interval can be understood as confidence in the prediction. In other words, the narrower the confidence interval, the higher the confidence in the prediction. The case of the confidence interval being empty can be considered a special case as in this case the EENN cannot confidently provide any prediction. In this case, a prediction can be considered as rejected from the EENN, i.e., the EENN cannot make a reliable prediction about the class or regression result.

Alternatively, it is also possible that the head is at a last position within order of heads.

According to these embodiments, all confidence intervals of the heads are combined in order to determine one single confidence interval, wherein combination can be understood as a union of all confidence intervals. Advantageously, the inventors found that these embodiments include all confidences and are hence most accurate with respect to the ensemble of decisions made by the different.

In general, the different applications of either "peeking" at the confidence and stopping if confidence is high enough or determining all confidence intervals can be traded off against each other depending on the available computational and timing constraints and constraints with respect to size of the confidence interval.

For example, if a prediction may not be highly safety critical but shall be delivered in short amount of time, the threshold can be chosen high such that a prediction is provided form an early head of the EENN. Alternatively, if the prediction is more safety critical, a smaller threshold may be chosen, potentially having the method run through all heads of the EENN.

All or some of the preferred or alternative embodiments presented above may be combined to form further embodiments of the method.

In another aspect, the invention concerns a computer-implemented method for determining a third element characterizing classification or regression result, wherein the method comprises determining a first element and second element according to any one of the claims 1 to 6, wherein the first element is provided as third element if the class characterized by the first element or the regression result characterized by the first element is within the confidence interval characterized by the second element and wherein otherwise a value characterizing a rejection is provided as third element.

In another aspect, the invention concerns a method for training the EENN. IN particular, the different methods presented above may further include determining the posterior distribution of the weights by means of Bayesian inference, in particular conjugate Bayesian inference.

Conjugate Bayesian inference may be understood as Bayesian inference using a conjugate prior. Advantageously, the conjugate Bayesian inference leads to particularly advantageous properties of the determined likelihood ratios. In particular, using conjugate Bayesian inference leads to an exact Bayesian inference of the posterior distribution.

Preferably, the early-exit neural network is pretrained in a pretraining step and wherein the steps of Bayesian inference are conducted after pretraining.

These embodiments of the method may be understood as first training the EENN, e.g., using regular gradient descent and thereby determining a maximum likelihood estimate of the weights of the backbone and the heads of the EENN and then discarding the weights for the heads and determining distributions of weights for the heads by means of Bayesian inference.

Advantageously, this allows for a light-weight Bayesian inference, i.e., only the heads are equipped with distributions for their respective weights, instead of having the backbone and thereby the entire EENN form a Bayesian neural network. The inventors found that having the heads perform Bayesian inference is enough for allowing for accurate confidence interval predictions. Thus compared to having the entire EENN being a Bayesian neural network, this reduces the computational complexity of the method.

Embodiments of the invention will be discussed with reference to the following figures in more detail. The figures show:

Figure 1    an early-exit neural network;

Figure 2    a control system comprising the early-exit neural network for controlling an actuator in its environment;

Figure 3    the control system controlling an at least partially autonomous robot;

Figure 4    the control system controlling a manufacturing machine;

Figure 5    the control system controlling an imaging system;

Figure 6    a training system for training the classifier.

Description of the embodiments

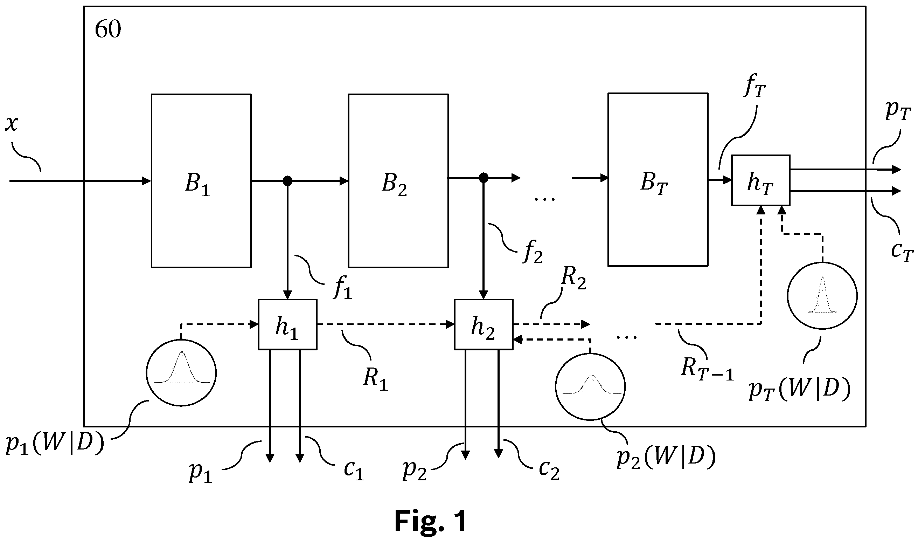

Figure 1 shows an embodiment of an early-exit neural network (EENN, 60). The EENN is provided a sensor signal ($x$) as input. In further embodiments (not shown) the input of the EENN (60) may also be a result of pre-processing the sensor signal ($x$). The embodiment in Figure 1 will be described in terms of using the sensor signal ($x$) as input for the EENN (60). However, all further details and all implementation choices of the EENN (60) and the method are also valid and possible when using a result of pre-processing the sensor signal ($x$) as input to the EENN (60).

The EENN (60) comprises a plurality of blocks ($B_1, B_2, B_T$) of layers, e.g., a plurality of residual blocks. At various points along the EENN (60), heads ($h_1, h_2, h_T$) are placed, wherein each head ($h_1, h_2, h_T$) is configured to receive a feature representation ($f_1, f_2, f_T$) from the EENN (60) and determine a first element ($p_1, p_2, p_T$) and a second element ($c_1, c_2, c_T$), wherein the first element ($p_1, p_2, p_T$) characterizes a classification or regression result of the sensor signal ($x$) and the second element ($c_1, c_2, c_T$) characterizes a confidence interval. The first element ($p_1, p_2, p_T$) may especially be one or multiple values indicating a class index, probabilities for a list of possible classes, or a real value as regression result. The second element ($c_1, c_2, c_T$) may be a set of classes form a set of possible classes if the first element ($p_1, p_2, p_T$) characterizes a classification. If the first element characterizes a regression result, the second element ($c_1, c_2, c_T$) may comprise two values indicating a lower and an upper bound of the confidence interval. Alternatively or additionally, the second element ($c_1, c_2, c_T$) may also comprise a single value indicating a width of the confidence interval. The blocks ($B_1, B_2, B_T$) can be considered as the backbone of the EENN (60).

Each head ($h_1, h_2, h_T$) receives as input a distinct feature representation ($f_1, f_2, f_T$). Each head receives a distinct distribution of possible weights ($p_1(W|D), p_2(W|D), p_T(W|D)$), which can each be considered a posterior distribution of weights of the respective head ($h_1, h_2, h_T$) given a training dataset $D$. The heads ($h_1, h_2, h_T$) may hence be understood as performing Bayesian inference on the predictive posterior distribution. In other words, each head ($h_1, h_2, h_T$) may be considered to perform Bayesian regression.

Each head ($h_1, h_2, h_T$) is further configured to determine a likelihood ratio ($R_1, R_2, R_{T-1}$). For this, a head is configured to sample a set of weights from the posterior distribution of possible weights ($p_1(W|D), p_2(W|D), p_T(W|D)$). The likelihood ratio is determined according to the formula

$$R_t(y) = \prod_{l=1}^{t} \frac{p_l(y|x, D)}{p(y|x, W_l)},$$

wherein $y$ is a possible class or regression result, $l$ is an index of a head in the plurality of heads, $p_l$ is the likelihood of the predictive posterior distribution of the $l$-th head, $p$ is the likelihood of predicting $y$ at head $l$ when using the set of sampled weights $W_l$, and $R_t(y)$ is the likelihood ratio (martingale) for head $t$.

In other words, the sensor signal ($x$) may be passed through the EENN (60) and the heads ($h_1, h_2, h_T$) may preferably be evaluated according to their order. Each head may preferably pass its computed likelihood ratio ($R_1, R_2, R_{T-1}$) to a next head, i.e., a head that follows the head in the order of heads. This way, the likelihood ratio ($R_1, R_2, R_{T-1}$) can be computed efficiently as each head ($h_1, h_2, h_T$) needs to only compute the fraction in the formula above and multiply the result the likelihood ratio received from the preceding head to determine the likelihood ratio ($R_1, R_2, R_{T-1}$) for the head.

If the heads ($h_1, h_2, h_T$) are configured for classification, the confidence intervals ($c_1, c_2, c_T$) may preferably be determined by determining a likelihood ratio for each class from the set of possible classes and compare it to a threshold characterized by the formula $1/\alpha$. Alternatively, if the heads ($h_1, h_2, h_T$) are configured for determining a regression result, the confidence interval may be determined in terms of an upper and lower bound of the confidence interval. The upper and lower bounds of the confidence interval can be determined as solutions to the expression

$$\log R_t(y) - \log\left(\frac{1}{\alpha}\right) = 0.$$

Preferably, the predictive posterior distribution is a Gaussian distribution (e.g., by defining the prior as a conjugate prior) which leads to the likelihood ratio formula as described above to be quadratic in $y$, which in turn allows for a closed-form solution of the roots of the formula above.

The inventors found that determining the likelihood ratio as described above leads to the sequence of confidence intervals determined from the heads ($h_1$, $h_2$, $h_T$) to form an (1 - $\alpha$)-confidence sequence. In other words, the probability of the true class (i.e., the class that the EENN (60) shall predict given the sensor signal ($x$)) or the true regression result (i.e., the regression result that the EENN (60) shall predict given the sensor signal ($x$)) is in all determined confidence intervals with probability 1 - $\alpha$. The value should hence be defined in terms of a probability value excluding 0 and 1, i.e., all numbers between 0 and 1.

As shown in the figure, a last head ($h_T$) of the EENN (60) may serve as providing an output of the EENN (60). In particular, the first element ($p_T$) and second element ($c_T$) may server as output of the EENN (60). Alternatively, the EENN (60) may also be configured to output only the first element ($p_T$) if the confidence interval for the first element ($p_T$) is smaller than a predefined threshold (which may especially be a different threshold from that applied to the likelihood ratio) but not empty. For classification, a width of the confidence interval may be expressed in terms of the number of possible classes in the confidence interval.

In general, a smaller confidence interval leads to a higher confidence in the first element ($p_1$, $p_2$, $p_T$) with the special caveat of the confidence interval being empty which characterizes that the EENN (60) cannot make a confident enough prediction about the first element ($p_T$). In this case, the first element may be set to a special value indicating a rejection.

The sensor signal ($x$) (or a result of pre-processing the sensor signal ($x$)) may be propagated through the entire EENN (60) in order to determine an ensemble decision from all heads ($h_1$, $h_2$, $h_T$). In these cases, it is preferred that none but the last of the heads ($h_T$) put out a first and second element. In other words, the heads other than the last head ($h_T$) may preferably only serve for determining the likelihood ratios ($R_1$, $R_2$, $R_{T-1}$) based on which the first element ($p_T$) and second element ($c_T$) of the last head ($h_T$) are then determined.

Alternatively, it is also possible to iteratively run computations in the EENN (60) until arriving at a next head ($h_1$, $h_2$, $h_T$) and "peeking" at the confidence interval. If the confidence interval is as wide or narrower than a predefined threshold, the first element of the current head may be put out and further computations for the sensor signal ($x$), i.e., further propagating the sensor signal ($x$) through the EENN (60) may be aborted.

The described thresholds can all be understood as hyperparameters of the method.

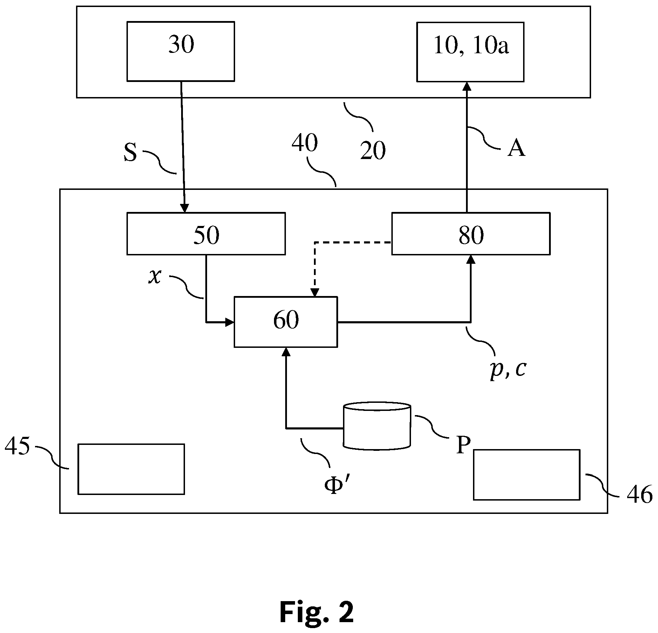

Figure 2 shows an embodiment of a control system (40) using the EENN (60) for determining a control signal (A) of an actuator (10) or a display. The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) pre-processes a sensor signal (S) into an input signal ($x$). Alternatively, in case of no receiving unit (50), each sensor signal (S) may directly be taken as an input signal ($x$). The input signal ($x$) may, for example, be given as an excerpt from the sensor signal (S). Alternatively, the sensor signal (S) may be processed to yield the input signal ($x$). In other words, the input signal ($x$) is provided in accordance with the sensor signal (S).

The input signal ($x$) is then passed on to the EENN (60).

The EENN (60) is parametrized by parameters ($\Phi$, e.g., the parameters of the backbone and the posterior distributions of weights of the heads), which are stored in and provided by a parameter storage ($St_1$).

The EENN (60) determines a first element ($p$) and a second element ($c$) from the input signal ($x$). The first element ($p$) and the second element ($c$) are transmitted to a conversion unit (80), which converts first element ($p$) and the second element ($c$) into the control signal (A). For example, the first element ($p$) and a second element ($c$) may be the output of a last head of the EENN (60). In this case, the first element ($p$) may be used for determining the control signal (A) automatically if the width of the confidence interval characterized by the second element ($c$) is equal to or narrower than a predefined threshold. Otherwise, the control signal (A) may be chosen to, e.g., hand over operation of the actuator to a human operator. In further embodiments (indicated by the dashed arrow), the first element ($p$) may be the output of a head other than the last head of the EENN (60). If the width of the confidence interval characterized by the second element ($c$) is wider than a predefined threshold, the EENN (60) may be instructed to proceed with determining the first element and second element of the next head. This approach may be run iteratively until either the confidence interval is narrow enough or until the first element and second element have been determined by the last head of the EENN (60). If the confidence interval is still not narrow enough, operation may again be handed over to a human operator.

In all embodiments described above, it is assumed that an empty confidence interval is also considered as the confidence interval being not narrow enough as in such a case the prediction about the input signal (*x*) is rejected by the EENN (60). A confidence of the prediction of the first element (*p*) may be understood as corresponding to the width of the confidence interval characterized by the second element (*c*), e.g., a confidence may be a reciprocal of the width of the confidence interval, again with the special case of an empty confidence interval. An insufficient confidence may be one for which the corresponding confidence interval is not as wide or narrower than the predefined threshold.

The control signals (A) are then transmitted to the actuator (10) for controlling the actuator (10) accordingly.

The actuator (10) receives control signals (A), is controlled accordingly, and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10). For example, a confidence of the current prediction of the EENN (60) may be put out on the display (10a).

Furthermore, the control system (40) may comprise at least one processor (45) and at least one machine-readable storage medium (46) on which instructions are stored which, if carried out, cause the control system (40) to carry out a method according to an aspect of the invention.

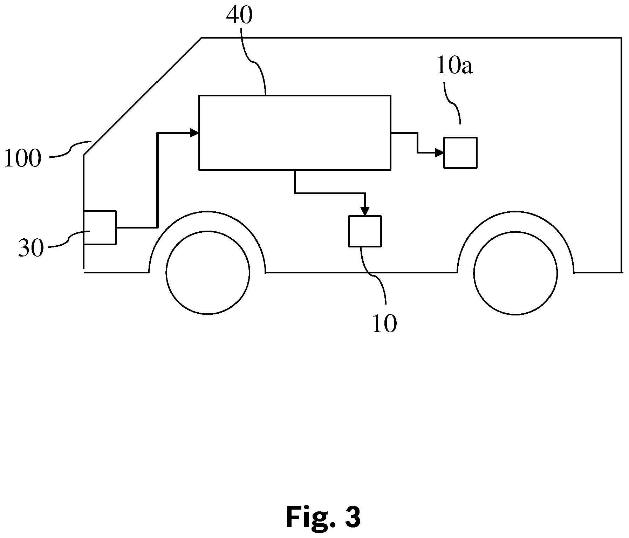

Figure 3 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input signal (*x*) may hence be understood as an input image and the EENN (60) as an image classifier.

The EENN (60) may be configured to detect objects in the vicinity of the at least partially autonomous robot based on the input image (*x*), i.e., to perform object detection. The first element (*p*) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the EENN (60) deems them most likely to be, e.g., pedestrians or trees, and the control signal (A) may be determined depending on the classification.

If the second element (c) determined by the EENN (60) characterizes an insufficient confidence in the first element (*p*), operation of the vehicle (100) may be handed over to a human driver or an external operator. Preferably, a handover is performed of the confidence has been insufficient for a predetermined amount of time or predictions of the EENN (60). Alternatively, it is also possible that the vehicle (100) performs an emergency maneuver (e.g., emergency brake, moving to an emergency lane, slowing down, or the like) if the confidence is insufficient or has been insufficient for a predefined amount of time or predictions of the EENN (60).

Alternatively or additionally, the control signal (A) may also be used to control the display (10a), e.g., for displaying the objects detected by the EENN (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving, or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, a control signal (A) may be determined to cause the actuator (10) to spray the plants with a suitable quantity of suitable liquids and/or cut the plants.

In even further embodiments, the at least partially autonomous robot may be given by a domestic appliance (not shown), e.g., a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

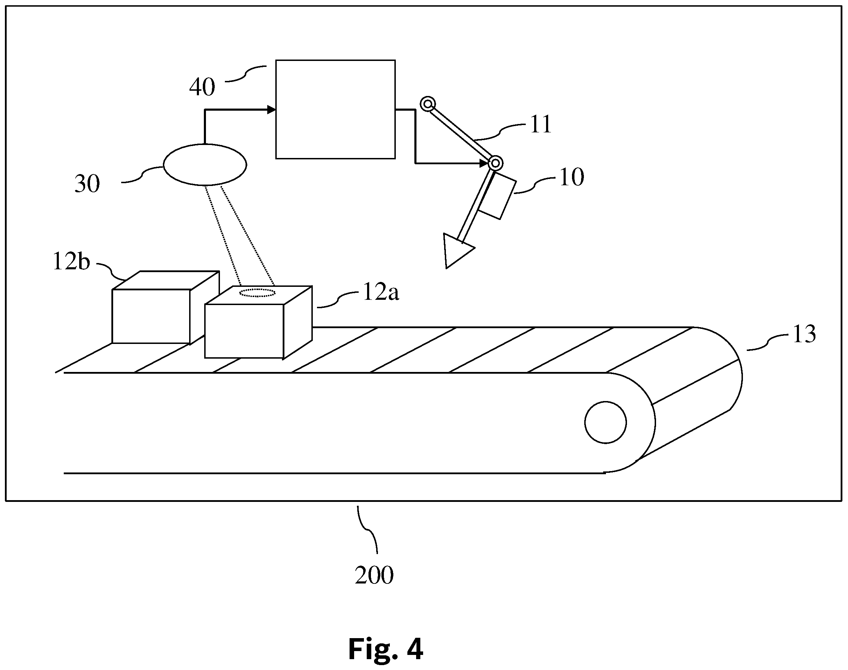

Figure 4 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The EENN (60) may hence be understood as an image classifier.

The EENN (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the EENN (60) classifies, whether the manufactured product is broken and/or exhibits a defect. The actuator (10) may then be controlled as to remove the manufactured product from the transportation device. The manufactured product may also be removed from the transportation device if the confidence of the EENN (60) is insufficient or has been insufficient for a predefined amount of time or predictions of the EENN (60).

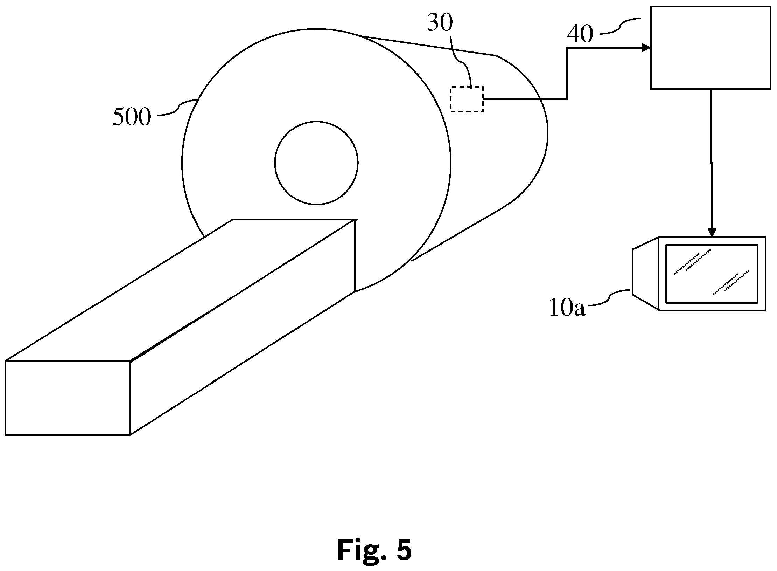

Figure 5 shows an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The EENN (60) may then determine a classification of at least a part of the sensed image. The at least part of the image is hence used as input image ($x$) to the EENN (60). The EENN (60) may hence be understood as an image classifier.

The control signal (A) may then be chosen in accordance with the classification, thereby controlling a display (10a). For example, the EENN (60) may be configured to detect different types of tissue in the sensed image, e.g., by classifying the tissue displayed in the image into either malignant or benign tissue. This may be done by means of a semantic segmentation of the input image ($x$) by the EENN (60). The control signal (A) may then be determined to cause the display (10a) to display different tissues, e.g., by displaying the input image ($x$) and coloring different regions of identical tissue types in a same color. If a confidence in a classification is insufficient, the display (10a) may be controlled as to highlight regions of insufficient confidence.

In further embodiments (not shown) the imaging system (500) may be used for non-medical purposes, e.g., to determine material properties of a workpiece. In these embodiments, the EENN (60) may be configured to receive an input image ($x$) of at least a part of the workpiece and perform a semantic segmentation of the input image ($x$), thereby classifying the material properties of the workpiece. The control signal (A) may then be determined to cause the display (10a) to display the input image ($x$) as well as information about the detected material properties. If a confidence in a classification is insufficient, the display (10a) may be controlled as to highlight regions of insufficient confidence.

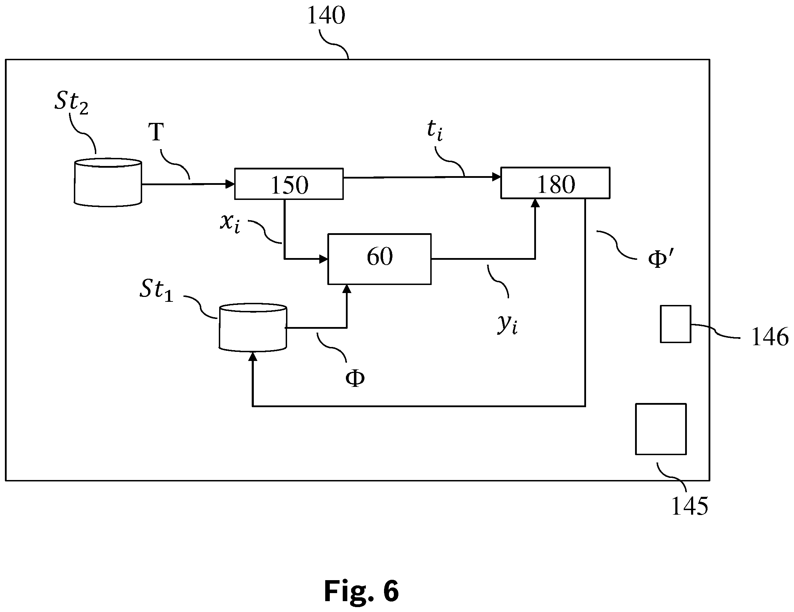

Figure 6 shows an embodiment of a training system (140) for pretraining or training the EENN (60) of the control system (40) by means of a training data set (T). The training data set (T) comprises a plurality of input signals ($x_i$) which are used for training the EENN (60), wherein the training data set (T) further comprises, for each input signal ($x_i$), a desired output signal ($t_i$) which corresponds to the input signal ($x_i$) and characterizes a desired classification or a desired regression result of the input signal ($x_i$).

For pre-training, the weights of the heads of the EENN (60) are chosen to be point estimates (i.e., not distributions). A training data unit (150) accesses a computer-implemented database ($St_2$), the database ($St_2$) providing the training data set (T). The training data unit (150) determines from the training data set (T) preferably randomly at least one input signal ($x_i$) and the desired output signal ($t_i$) corresponding to the input signal ($x_i$) and transmits the input signal ($x_i$) to the EENN (60). The EENN (60) determines an output signal ($y_i$) based on the input signal ($x_i$).

The desired output signal ($t_i$) and the determined output signal ($y_i$) are transmitted to a modification unit (180).

Based on the desired output signal ($t_i$) and the determined output signal ($y_i$), the modification unit (180) then determines new parameters ($\Phi'$) for the EENN (60). For this purpose, the modification unit (180) compares the desired output signal ($t_i$) and the determined output signal ($y_i$) using a loss function. The loss function determines a first loss value that characterizes how far the determined output signal ($y_i$) deviates from the desired output signal ($t_i$). In the given embodiment, a negative log-likelihood function is used as the loss function. Other loss functions are also conceivable in alternative embodiments.

Furthermore, it is conceivable that the determined output signal ($y_i$) and the desired output signal ($t_i$) each comprise a plurality of sub-signals, for example in the form of tensors, wherein a sub-signal of the desired output signal ($t_i$) corresponds to a sub-signal of the determined output signal ($y_i$). It is conceivable, for example, that the EENN (60) is configured for object detection and a first sub-signal characterizes a probability of occurrence of an object with respect to a part of the input signal ($x_i$) and a second sub-signal characterizes the exact position of the object. If the determined output signal ($y_i$) and the desired output signal ($t_i$) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the EENN (60).

For training, the training dataset (T) may then be used to perform Bayesian inference on the weights of the respective heads of the EENN (60). For this, the weights of the backbone of the EENN (60) may preferably be fixed to the values determined during pretraining and the weights of the heads of the EENN (60) may be discarded. For each training input signal ($x_i$) a head is then provided a respective feature representation from its part of the backbone. Based on this feature representation, the posterior distribution of weights is then determined for each head using Bayesian inference, preferably conjugate Bayesian inference.

Furthermore, the training system (140) may comprise at least one processor (145) and at least one machine-readable storage medium (146) containing instructions which, when executed by the processor (145), cause the training system (140) to execute a training method according to one of the aspects of the invention.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

## Claims

1. Computer-implemented method for determining a first element ($p_1$, $p_2$, $p_T$) and a second element ($c_1$, $c_2$, $c_T$), wherein the first element ($p_1$, $p_2$, $p_T$) characterizes a classification or a regression result of a sensor signal ($x$) and the second element ($c_1$, $c_2$, $c_T$) characterizes a confidence interval of likely classifications or regression results, wherein the first element ($p_1$, $p_2$, $p_T$) and second element ($c_1$, $c_2$, $c_T$) are determined by an early-exit neural network (60), the method comprising the steps of:

   • Determining, by the early-exit neural network (60), a feature representation ($f_1$, $f_2$, $f_T$) of the sensor signal ($x$), which is provided to a head ($h_1$, $h_2$, $h_T$) of the early-exit neural network (60);
   • Providing a predictive posterior distribution or an argument of the maximum of the predictive posterior distribution as first element ($p_1$), wherein the predictive posterior distribution is determined based on a posterior distribution of sets of weights ($p_1(W|D)$, $p_2(W|D)$, $p_T(W|D)$) of the head ($h_1$, $h_2$, $h_T$) and a likelihood of the feature representation given a set of weights of the head ($h_1$, $h_2$, $h_T$);
   • Sampling a set of weights from the posterior distribution of sets of weights ($p_1(W|D)$, $p_2W|D)$, $p_T(W|D)$) of the head ($h_1$, $h_2$, $h_T$);
   • Determining a likelihood ratio ($R_1$, $R_2$, $R_{T-1}$) for possible classifications or regression results by dividing a value of the predictive posterior distribution at the feature representation ($f_1$, $f_2$, $f_T$) by a likelihood of the feature representation given the sampled set of weights;
   • Determining the confidence interval as the possible classes or regression results for which the likelihood ratio is equal to or below a predefined threshold and providing the confidence interval or a value characterizing the width of the confidence interval as the second element ($c_1$, $c_2$, $c_T$).

2. Method according to claim 1, wherein the early-exit neural network (60) comprises a plurality of heads ($h_1$, $h_2$, $h_T$), wherein sets of weights for each head ($h_1$, $h_2$, $h_T$) are **characterized by** a posterior distribution of sets of weights ($p_1(W|D)$, $p_2(W|D)$, $p_T(W|D)$) and an order of the plurality of heads ($h_1$, $h_2$, $h_T$) is given by their position within the early-exit neural network (60) and wherein the head ($h_1$, $h_2$, $h_T$) is preceded by at least one other head in the order of heads ($h_1$, $h_2$, $h_T$) and wherein the likelihood ratio ($R_1$, $R_2$, $R_{T-1}$) for a possible class or regression result is determined by multiplying a likelihood ratio for the class or regression result determined for the other head with the likelihood ratio determined for the head ($h_1$, $h_2$, $h_T$).

3. Method according to claim 2, wherein a likelihood ratio ($R_1$, $R_2$, $R_{T-1}$) for any head ($h_1$, $h_2$, $h_T$) of the plurality of heads is determined according to the formula:

$$R_t(y) = \prod_{l=1}^{t} \frac{p_l(y|x,D)}{p(y|x,W_l)},$$

wherein $y$ is a possible class or regression result, $l$ is an index of a head in the plurality of heads, $p_l$ is the likelihood of the predictive posterior distribution of the $l$-th head given a training dataset $D$ and an input $x$ to the EENN, and $p$ is the likehood of predicting y at head $l$ when using the set of sampled weights $W_l$.

4. Method according to claim 3, wherein the first element ($p_1$, $p_2$, $p_T$) characterizes a regression result and the confidence interval is determined by determining bounds of the confidence interval, wherein the bounds of the confidence interval are the roots of a function **characterized by** the formula:

$$\log R_t(y) - \log(1/\alpha) = 0,$$

wherein $1/\alpha$ is the predefined threshold.

5. Method according to any one of the claims 2 to 4, wherein the head ($h_1$, $h_2$, $h_T$) is not a last head in the plurality of heads and wherein the predictive posterior distribution or a maximum of the predictive posterior distribution is provided as first element ($p_1$, $p_2$, $p_T$) and the confidence interval or the value characterizing the width of the confidence interval is provided as the second element ($c_1$, $c_2$, $c_T$) if the confidence interval is smaller than or equal to a predefined threshold but not empty and wherein otherwise the predictive posterior distribution or a maximum of the predictive posterior distribution corresponding to a head following the head ($h_1$, $h_2$, $h_T$) is provided as first element and a second confidence interval or a value characterizing the width of the second confidence interval corresponding to the head following the head ($h_1$, $h_2$, $h_T$) is provided as confidence interval.

6. Method according to any one of the claims 2 to 5, wherein the head ($h_1$, $h_2$, $h_T$) is at a last position within the order of heads.

7. Computer-implemented method for determining a third element characterizing classification or regression result, wherein the method comprises determining a first element ($p_1$, $p_2$, $p_T$) and second element ($c_1$, $c_2$, $c_T$) according to any one of the claims 1 to 6, wherein the first element ($p_1$, $p_2$, $p_T$) is provided as third element if the class **characterized by** the first element ($p_1$, $p_2$, $p_T$) or the regression result **characterized by** the first element ($p_1$, $p_2$, $p_T$) is within the confidence interval **characterized by** the second element ($c_1$, $c_2$, $c_T$) and wherein otherwise a value characterizing a rejection is provided as third element.

8. Method according to any one of the claims 1 to 7, wherein the method further includes determining the posterior distribution of the weights ($p_1(W|D)$, $p_2(W|D)$, $p_T(W|D)$) by means of Bayesian inference, in particular conjugate Bayesian inference.

9. Method according to claim 8, wherein the early-exit neural network (60) is pretrained in a pretraining step and wherein the steps of claim 8 are conducted after pretraining.

10. Training system (140), which is configured to carry out the training method according to claim 8 or 9.

11. Control system (40), which is configured to carry out the method according to any one of the claims 1 to 7, wherein the control system (40) determines a control signal (A) based on the first element ($p_1$, $p_2$, $p_T$) and the second element ($c_1$, $c_2$, $c_T$) or based on the third element, wherein the control signal (A) is configured to control an actuator (10) and/or a display (10a).

12. Computer program that is configured to cause a computer to carry out the method according to any one of the claims 1 to 9 with all of its steps if the computer program is carried out by a processor (45, 145).

13. Machine-readable storage medium (46, 146) on which the computer program according to claim 12 is stored.

**Fig. 1**

**Fig. 2**

EP 4 524 818 A1

**Fig. 3**

**Fig. 4**

EP 4 524 818 A1

**Fig. 5**

EP 4 524 818 A1

**Fig. 6**

Europäisches Patentamt

European Patent Office

Office européen des brevets

# EUROPEAN SEARCH REPORT

Application Number

**EP 23 19 6918**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LASSI MERONEN ET AL: "Fixing Overconfidence in Dynamic Neural Networks", ARXIV.ORG, CORNELL UNIVERSITY LIBRARY, 201 OLIN LIBRARY CORNELL UNIVERSITY ITHACA, NY 14853, 20 April 2023 (2023-04-20), XP091488485, * Sections 2 and 3; figures 1,2 * | 1-13 | INV. G06N3/047 G06N3/084 G06N7/01 |

TECHNICAL FIELDS SEARCHED (IPC)

G06N

The present search report has been drawn up for all claims

| Place of search | Date of completion of the search | Examiner |
|---|---|---|
| The Hague | 22 February 2024 | Szymanski, Francois |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MERONEN et al.** *Fixing Overconfidence in Dynamic Neural Networks*, 2023, https://arxiv.org/abs/2302.06359

- **WAUDBY-SMITH** ; **RAMDAS**. *Confidence sequences for sampling without replacement*, 2020, https://arxiv.org/abs/2006.04347